(19) Europäisches Patentamt
European Patent Office
Office européen des brevets

(11) **EP 3 147 833 A1**

(12) **EUROPEAN PATENT APPLICATION**

(43) Date of publication:
**29.03.2017 Bulletin 2017/13**

(51) Int Cl.:
*G06Q 10/04* (2012.01)  *G06Q 30/02* (2012.01)
*G06Q 30/00* (2012.01)  *G06K 9/00* (2006.01)

(21) Application number: **16189543.8**

(22) Date of filing: **19.09.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **28.09.2015 US 201514867776**

(71) Applicant: **Xerox Corporation**
**Rochester, NY 14644 (US)**

(72) Inventor: **DANCE, Christopher R.**
**38000 Grenoble (FR)**

(74) Representative: **Gill Jennings & Every LLP**
**The Broadgate Tower**
**20 Primrose Street**
**London EC2A 2ES (GB)**

(54) **INFERENCE FOR MOBILE PARKING SENSOR DATA**

(57) Methods and systems for characterizing mobile parking sensor data. With a generative model, a targeted random variable can be identified from parking data collected from one or more mobile sensors. The parking data includes data indicative of time instants and geographical locations. In some cases, a proportion of parking stalls associated with payment data can be derived from the targeted random variable at each time instant and for each street block face among the geographical locations. Parameters of the generative model can be determined base on observed data that is at least partial in time. The generative model is then applied in order to infer quantities of interest for use in characterizing the parking data including a price and a rate with respect to the quantities of interest.

*80*

IDENTIFYING WITH GENERATIVE MODEL A TARGETED RANDOM VARIABLE FROM PARKING DATA COLLECTED FROM A MOBILE DEVICE — *83*

DRIVING FROM THE TARGETED RANDOM VARIABLE AT EACH TIME INSTANT AND FOR EACH STREET BLOCK FACE, A PROPORTION OF PARKING STALLS THAT ARE OCCUPIED-UNPAID, AND VACENT-UNPAIED — *85*

ESTIMATING PARAMETERS OF THE GENERATIVE MODEL BASED ON OBSERVED DATA THAT IS PARTIAL IN TIME A NATURE OF THE OBSERVED DATA — *87*

APPLYING THE GENERATIVE MODEL IN ORDER TO INFER QUANTITIES OF INTEREST FOR USE IN CHARACTERIZING THE PARKING DATA AND OPTIMIZING PARKING INCLUDING PARKING OCCUPANCY AND PAYMENT WITH RESPECT TO THE QUANTITIES OF INTEREST — *89*

*FIG. 8*

EP 3 147 833 A1

**Description**

TECHNICAL FIELD

Embodiments are generally related to the field of parking management. Embodiments also relate to mobile computing devices and mobile sensor technologies including digital video cameras that acquire parking occupancy images and related data.

BACKGROUND OF THE INVENTION

A goal of many modern cities and urban areas is the use of mobile sensor technologies to collect parking occupancy data and to couple this with payment data while minimizing the risk of errors associated with parking policy decisions, and additionally while also guiding drivers and parking enforcement officers. Mobile sensors move continuously and therefore only "see" the occupancy at instants of time, in contrast to portable sensors which observe a block face for a day or a week before moving. Such sensing methods are capable of providing a much better trade-off between the value of data and the cost of data collection than installing sensors in every stall.

BRIEF SUMMARY

The following summary is provided to facilitate an understanding of some of the innovative features unique to the disclosed embodiments and is not intended to be a full description. A full appreciation of the various aspects of the embodiments disclosed herein can be gained by taking the entire specification, claims, drawings, and abstract as a whole.
It is, therefore, one aspect of the disclosed embodiments to provide improved methods and systems for parking management.
It is another aspect of the disclosed embodiments to provide an improved parking management method and system that utilizes data collected from mobile computing devices and mobile sensor technologies.
It is yet another aspect of the disclosed embodiments to provide methods and systems for collecting parking occupancy images and related data for analysis and use in optimizing parking management.
It is still another aspect of the disclosed embodiments to provide methods and systems for characterizing mobile parking sensor data including inference techniques thereof.
It is another aspect of the disclosed embodiments to provide for a generative model that can be applied to infer quantities of interest for use in characterizing the parking data and in recommending updated policy variables such as, for example, rates.
The aforementioned aspects and other objectives and advantages can now be achieved as described herein. Methods and systems for characterizing mobile parking sensor data are disclosed. With a generative model, a targeted random variable can be identified from parking data collected from one or more mobile sensors. The parking data includes data indicative of time instants and geographical locations. A proportion of parking stalls associated with payment data can then be derived from the targeted random variable at each time instant and for each street block face among the geographical locations. Parameters of the generative model can be determined based on observed data that is at least partial in time. The generative model is then applied in order to infer quantities of interest for use in characterizing the parking data and in recommending updated policy variables such as, for example, rates.

BRIEF DESCRIPTION OF THE DRAWINGS

The accompanying figures, in which like reference numerals refer to identical or functionally-similar elements throughout the separate views and which are incorporated in and form a part of the specification, further illustrate the present invention and, together with the detailed description of the invention, serve to explain the principles of the present invention.

FIG. 1 illustrates a block diagram of a system for use in collecting parking occupancy data, in accordance with a preferred embodiment;

FIG. 2 illustrates a schematic diagram of the mobile device shown in FIG. 1, according to another example embodiment;

FIG. 3 illustrates a graph depicting example data indicative of ROC for detecting block faces with vacancies, in accordance with another example embodiment;

FIGS. 4A-4B illustrate graphs depicting example data indicative of the relation between OF (Occupancy Fraction) and PF (Payment Fraction), in accordance with another example embodiment;

FIGS. 5A-5B illustrate graphs depicting example data of 150 sparse-in-time samples for a particular location, in accordance with another example embodiment;

FIGS. 6A-6B illustrate graphs depicting example data indicative of sparse-in-time samples for a particular location and corresponding to 3-hour averages, in accordance with another example embodiment;

FIGS. 7A-7B illustrate graphs depicting example data indicative of predicted joint occupancy-payment behavior for a particular location, in accordance with another example embodiment;

FIG. 8 illustrates a high-level flow chart of operations depicting logical operational steps of a method for characterizing mobile parking sensor data, in accordance with an example embodiment;

FIG. 9 illustrates a schematic view of a computer system, in accordance with an example embodiment; and

FIG. 10 illustrates a schematic view of a software system including a module, an operating system, and a user interface, in accordance with an example embodiment.

DETAILED DESCRIPTION

The particular values and configurations discussed in these non-limiting examples can be varied and are cited merely to illustrate one or more embodiments and are not intended to limit the scope thereof.

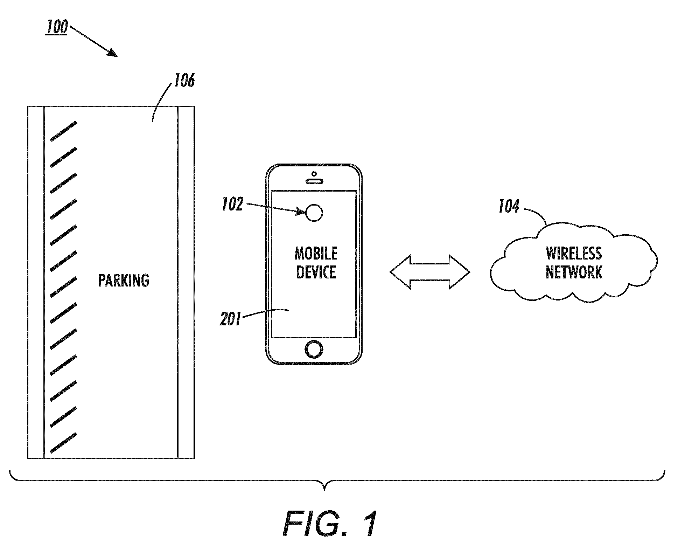

FIG. 1 illustrates a block diagram of a system 100 for use in collecting parking occupancy data, in accordance with a preferred example embodiment. System 100 generally includes a mobile device 201 having a mobile sensor 102 such as a digital video camera. The mobile device 201 (e.g., a wireless/cellular Smartphone, mobile tablet computing device, and so on) can communicate wirelessly with a wireless network 104. Note that as utilized herein, the term "mobile device" does not refer simply to a hand-held like electronic device such as a Smartphone, tablet computer, and so on, but refers to "mobile" or "mobility" in the sense of, for example, a system, apparatus, or device mounted on or integrated with a moving vehicle. The system 100 shown in FIG. 1 is merely one example of the use of a "mobile device" and "mobile sensors." Other embodiments can be implemented as mobile sensors and/or devices in the context of a vehicle.

In some embodiments, the wireless network 104 may be, for example, a cellular telephone network (e.g., CDMA, TDMA, GSM, etc.). In other embodiments, the wireless network 104 may be a Wi-Fi network. In still other embodiments, the wireless network 104 may be a combined Wi-Fi/cellular telephone network or a wireless network of another type. The mobile sensor 102 can be employed to collect parking occupancy data with respect to a parking area 106. The parking area 106 can be, for example, a parking lot, an on-street parking area, and so on.

In an experimental embodiment, for example, wires can be used with respect to a laptop located in a car or in the context of SD cards and terabyte hard drives implanted in or connected to the cameras. The reason is that a great deal of bandwidth is required to transmit potentially high frame rate and high-resolution video. Indeed, much of the cost even of in-street sensing solutions, which only need to send 8 bits of data every 10 seconds, is the cost of wireless communication and the batteries required to power such communication.

As will be disclosed in greater detail herein, a municipality or city or other organization or agency can use mobile sensors such as mobile sensor 102 to collect parking occupancy data and couple this with payment data to make inferences that minimize the risk of errors in policy decisions and in guiding drivers and enforcement officers. As will be explained in greater detail herein, an inference procedure and system can be implemented for occupancy and payment that is suited to mobile sensor observations that are sparse in space and in time.

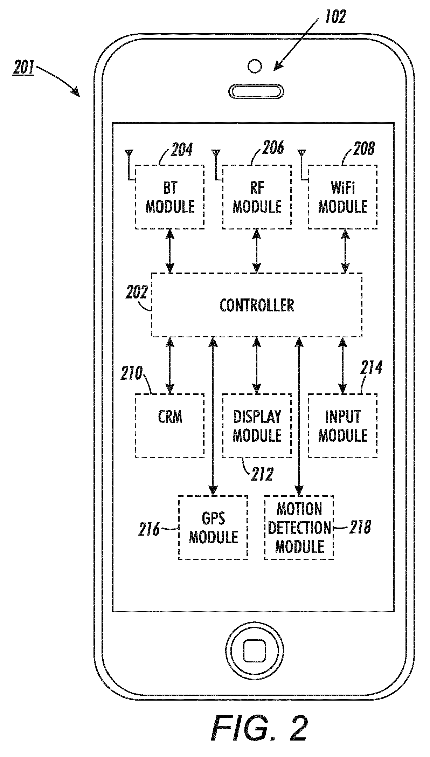

FIG. 2 illustrates a schematic diagram of the mobile device 201 shown in FIG. 1, in accordance with an example embodiment. It will be appreciated that the mobile device 201 shown in FIG. 2 is illustrative and that variations and modifications are possible. Thus, in some embodiments, the mobile device 201 may not be a Smartphone, but may be, for example, a mobile tablet computing device. In some embodiments, the mobile sensor 102 may be implemented as a standalone camera mounted to a vehicle such that camera communicates (e.g., wired or wireless) with another device or an in-vehicle positioned mobile device. In the embodiment shown in FIG. 2, however, the mobile device 201 is shown for exemplary purposes as a Smartphone or tablet computing device implementation.

As depicted in the example shown in FIG. 2, mobile device 201 can include a mobile sensor 102 (e.g., a digital video camera), a controller 202, a Bluetooth module 204, an RF module 206, a WiFi module 208, a computer-readable medium (CRM) 210, a display module 212, an input module 214, a global positioning system (GPS) module 216, and a motion detection module 218. The controller 202 can, for example, control the activities of the mobile sensor 102 including the collection, transmission, and display of any data (e.g., video data) acquired by the mobile sensor 102.

In some embodiments, mobile device 201 can include additional modules, such as battery modules, device orientation modules, magnetometer modules, three-dimensional gyroscope modules, connector modules, audio modules, three-dimensional video processing modules, acceleration detection modules, camera modules, and/or the like. In some embodiments, mobile device 201 can be a sufficient size, dimension, and weight to enable the device to be easily moved by a user. For example, mobile device 201 can be pocket sized.

Controller 202, which can be implemented as one or more integrated circuits can control and manage the overall operation of mobile device 201. For example, controller 202 can perform various tasks, such as retrieving various assets that can be stored in CRM 210, accessing the functionalities of various modules (e.g., interacting with other Bluetooth enabled devices via Bluetooth module 204), executing various software programs (e.g., operating systems and applications) residing on CRM 210, and so on. In some embodiments, controller 202 can include one or more processors (e.g., microprocessors or microcontrollers) configured to execute machine-readable instructions. For example, controller 202 can include a single chip applications processor. Controller 202 can further be connected to CRM 210 in any suitable manner.

Bluetooth module 204 can include any suitable combinations of hardware for performing wireless communications with other Bluetooth-enabled devices. An RF signal can be exchanged between controller 202 and other Bluetooth enabled devices. In some embodiments, Bluetooth module 204 can perform such wireless communications according to Bluetooth Basic Rate/Enhanced Data Rate (BR/EDR) and/or Bluetooth Low Energy (LE) standards. The Bluetooth protocol, in general, enables point-to-point wireless communications between multiple devices over short distances (e.g., 30 meters)

Bluetooth has gained widespread popularity since its introduction and is currently used in a range of different devices. In order to allow Bluetooth to be used in a greater variety of applications, a low energy variant of the technology was introduced in the Bluetooth Core Specification, Version 4.0. Bluetooth Low Energy (LE), in general, enables devices to wirelessly communicate while drawing low amounts of power. Devices using Bluetooth LE can often operate for more than a year without requiring their batteries to be recharged.

For example, Bluetooth module 204 can include suitable hardware for performing device discovery, connection establishment, and communication based on only Bluetooth LE (e.g., single mode operation). As another example, Bluetooth module 204 can include suitable hardware for device discovery, connection establishment, and communication based on both Bluetooth BR/EDR and Bluetooth LE (e.g., dual mode operation). As still another example, Bluetooth module 204 can include suitable hardware for device discovery, connection establishment, and communication based only on Bluetooth BR/EDR.

RF module 206 can include any suitable combinations of hardware for performing wireless communications with wireless voice and/or data networks. For example, RF module 206 can include an RF transceiver that enables a user of mobile device 201 to place telephone calls over a wireless voice network. WiFi module 208 can include any suitable combinations of hardware for performing WiFi based communications with other WiFi enabled devices. CRM 210 can be implemented, e.g., using disk, flash memory, random access memory (RAM), hybrid types of memory, optical disc drives, or any other storage medium that can store program code and/or data. CRM 210 can store software programs that are executable by controller 202, including operating systems, applications, and related program code.

Software programs (also referred to as software or apps herein) can include any program executable by controller 202. In some embodiments, certain software programs can be installed on mobile device 201 by its manufacturer, while other software programs can be installed by a user. Examples of software programs can include operating systems, vehicle locator applications, productivity applications, video game applications, personal information management applications, applications for playing media assets and/or navigating a media asset database, applications for controlling a telephone interface to place and/or receive calls, and so on. For example, software programs can include an application that enables a user of mobile device 201 to activate and control the mobile sensor 102 (e.g., digital video camera). Certain software programs can provide communication with and/or control of mobile devices, and certain software programs can be responsive to control signals or other input from mobile device 201.

Display module 212 can be implemented using any suitable display technology, including a CRT display, an LCD display (e.g., touch screen), a plasma display, a direct-projection or rear-projection DLP, a micro display, and/or the like. In various embodiments, display module 212 can be used to visually display user interfaces, images, and/or the like.

Input module 214 can be implemented as a touch screen (e.g., LCD based touch screen), a voice command system, a keyboard, a computer mouse, a trackball, a wireless remote, a button, and/or the like. Input module 214 can allow a user to provide inputs to invoke the functionality of controller 202. In some embodiments, input module 214 and display module 212 can be combined or integrated. For example, mobile device 201 can include an LCD-based touch screen that displays images and also captures user input. Illustratively, a user can tap his or her finger on a region of the touch screen's surface that displays an icon. The touch screen can capture the tap and, in response, start a software program associated with the icon. Upon starting the software program, a graphical user interface for the application can be displayed on the touch screen for presentation to the user.

Previous work on inference about occupancy given sparse data assumed that occupancy is measured over finite intervals of time. The disclosed approach does not require such an assumption. One approach to the required inference would be to fit linear relationships between averages of occupancy and payment. The City of San Francisco recently deployed, for example, linear regression to predict occupancy fractions given payment fractions, based on historical near-complete sensor and payment data, claiming that their policy decision error rates of 30% are good, although one may consider such rates high. While such an approach can roughly estimate time-average occupancy fractions, this approach provides poor averages of fraction-high-minus-fraction-low.

One improvement would be to fit a Gaussian process to the occupancy fraction, but the disclosed embodiments go further. That is, as will be discussed in greater detail herein, a generative model can be implemented wherein counts of {occupied, vacant} x {paid, unpaid} stalls (the full state) are small, bounded integers, not Gaussians. The disclosed approach assumes latent processes driving the full state and its dispersion, which are combinations of a Gaussian process and basis functions. Note that one example of a generative model that can be employed is latent Gaussian process model. It should be appreciated, however, that other types of generative models may be employed.

The disclosed methodology makes more accurate guesses about the full state. Specifically, the basis functions allow for (near-)discontinuities, for instance, in payment at the end of operating hours. Thus, inferences can be made outside operating hours, which is not-at-all reasonable with methods that perform a linear regression from payment to occupancy. The disclosed approach provides reliable uncertainty measures, which are important as the times and places observed and mobile-sensing error rates may not be under our control. Thus, we can prefer no-policy-change when uncertainty is high and use Gaussian-process bandits to route mobile sensors. Because a generative model is employed, multiple input types can be exploited simultaneously, such as payment-only, occupancy-and-payment-only as well as full-state data from manual surveys. Finally, a layer can be added to the model, for instance, to account for errors in mobile sensors' occupancy counts.

The disclosed approach also involves at least two claims of novelty that can be made relative to the state-of-the-art regarding latent Gaussian processes. First, the disclosed approach recognizes Laplace approximation as a bi-level program and utilizes a bi-level trust-region method, which is faster and more reliable for non-convex models than known methods. Second, a new covariance model can be implemented, which captures the fact that all days-of-the-week are different, but some are more different than others.

The state of a single block face of capacity n can be summarized at time t by a vector $\mathbf{Z}(t)$ which sums to n with components $Z_1(t)$, $Z_2(t)$, $Z_3(t)$, $Z_4(t)$ which are the number of stalls that are occupied-and-paid, occupied-and-unpaid, vacant-and-paid, or vacant-and-unpaid. For simplicity, it can be assumed that observations $\mathbf{Y}(t)$ of the block face are of the form $\mathbf{Y}(t) = \mathbf{A}(t)\mathbf{Z}(t)$, where $\mathbf{A}(t)$ can be:

$$\begin{pmatrix} 1 & 0 & 0 & 0 \\ 0 & 1 & 0 & 0 \\ 0 & 0 & 1 & 0 \\ 0 & 0 & 0 & 1 \end{pmatrix}, \begin{pmatrix} 1 & 1 & 0 & 0 \\ 1 & 0 & 1 & 0 \end{pmatrix}, \begin{pmatrix} 1 & 1 & 0 & 0 \end{pmatrix}, \begin{pmatrix} 1 & 0 & 1 & 0 \end{pmatrix}$$

for a full-state observation, an occupancy-and-payment-only observation, an occupancy-only observation, or a payment-only observation respectively. Other options are discussed later herein. The "operating hours" or "hours of operation", which are times at which it is legal to park and at which is typically necessary to pay, are represented by the indicator $S(t) := 1_{t \in operating hours} \in \{0,1\}$ which is useful for predicting payment probabilities which can undergo near-discontinuous behavior at the ends of the operating hours. A set of observations at times $t_1,..., t_{N_t}$ forms a dataset D and a collection of datasets for mode and hyper parameter selection forms a training set $\mathfrak{D}$

$$D := \{(t_1, \mathbf{A}(t_1), \mathbf{Y}(t_1)), \ldots, (t_{N_t}, \mathbf{A}(t_{N_t}), \mathbf{Y}(t_{N_t}))\}, \quad \mathfrak{D} := \{D_1, \ldots, D_{N_D}\}$$

The problem is to estimate functionals of the full state Z(t) given D, such as in the cases of real-time drier guidance and policy decisions. Real-time driver guidance requires the probability that there is at least one vacant stall at t+δt given the payment at t, which is $P(Z_1(t+\delta t)+Z_2(t+\delta t)<n|Z_1(t)+Z_3(t),D)$. Real-time enforcement guidance requires the expected number of stalls that are occupied-and-unpaid given the current payment, which is $E[Z_2(t+\delta t)|Z_1(t)+Z_3(t),D]$. Policy decisions, regarding rates, operating hours, time limits, and time-of-day/-week segments require the average occupancy fraction, fraction-high-minus-fraction-low, or other occupancy-based criteria over a set of past, present, or future times H. History-based enforcement guidance requires the average number of stalls that are occupied-and-unpaid over a set of times H. Each is of the form $\langle F(Z(t))_{t \in H} \mid D$ for appropriate F(·).

The disclosed embodiments generally include three parts: the model, parameter estimation, and prediction.

Regarding the model, at any time t, a latent Gaussian process model can be utilized as follows:

*(Observations)*      Y(t) | A(t), Z(t) = A(t)Z(t)

*(Full state)*      Z(t) | n, α(t) ~ MultinomialDirichlet(n, α(t))

*(Dirichlet parameters)*      α(t) | z(t), m = σ(z(t) + M(t)m)

*(Combined process)*

$$\mathbf{z}(t) \mid \mathbf{z}_1(t), \mathbf{z}_7(t), \boldsymbol{\theta} = \sqrt{w(t \mid \boldsymbol{\theta})}\mathbf{z}_1(t) + \sqrt{1 - w(t \mid \boldsymbol{\theta})}\mathbf{z}_7(t)$$

*(Daily process)* $\mathbf{z}_1(\cdot) \mid \boldsymbol{\theta} \sim \mathcal{GP}(0(\cdot), \mathrm{K}_1(\cdot, \cdot \mid \boldsymbol{\theta}))$

*(Weekly process)* $\mathbf{z}_7(\cdot) \mid \boldsymbol{\theta} \sim \mathcal{GP}(0(\cdot), \mathrm{K}_7(\cdot, \cdot \mid \boldsymbol{\theta}))$

*(Prior)* $(\mathbf{m}, \boldsymbol{\theta}) \sim \mathcal{N}(\boldsymbol{\mu}, \boldsymbol{\Sigma}).$

An observation **Y**(t) at time t depends on the full state **Z**(t) and the type of observation, which is provided by the matrix **A**(t) as in the problem description. Given the capacity n and Dirichlet parameters $\alpha(t) \in R_+^4$, the full state **Z**(t) has a multinomial-Dirichlet distribution, so the observations are marginalized multinomial-Dirichlets as follows:

$$\mathbb{P}(\mathbf{Y}(t) \mid \mathbf{A}(t), \boldsymbol{\alpha}(t), n) = \sum_{\{\mathbf{Z} \in \mathbb{Z}_+^4 : \mathbf{A}(t)\mathbf{Z} = \mathbf{Y}(t), 1 \cdot \mathbf{Z} = n\}} \frac{\frac{\Gamma(n+1)\Gamma(1 \cdot \boldsymbol{\alpha}(t))}{\Gamma(n+1 \cdot \boldsymbol{\alpha}(t))}}{\prod_{i=1}^4 \frac{\Gamma(Z_i+1)\Gamma(\alpha_i(t))}{\Gamma(Z_i+\alpha_i(t))}}$$

Parameters α(t) are related to a Gaussian process u := z(t) + M(t)m through the mean function:

$$\sigma(\mathbf{u}) := \frac{1}{e^{u_4}}\left(\frac{e^{u_1}}{1+e^{u_1}}\frac{e^{u_2}}{1+e^{u_2}}, \frac{e^{u_1}}{1+e^{u_1}}\frac{1}{1+e^{u_2}}, \frac{1}{1+e^{u_1}}\frac{e^{u_3}}{1+e^{u_3}}, \frac{1}{1+e^{u_1}}\frac{1}{1+e^{u_3}}\right)^T$$

with the interpretation that $u_1$, $u_2$, $u_3$ are the logged odds of being occupied, paid-given-occupied, and paid-given-vacant, while $u_4$ controls the dispersion of Z. Indeed, if X is a multinomial random variable with the same count n and mean as Z then:

$$\frac{\mathrm{Cov}(Z_i, Z_j)}{\mathrm{Cov}(X_i, X_j)} = \frac{e^{u_4}}{1+e^{u_4}}(n-1) + 1 \quad \text{for any } i, j \in \{1, \ldots, 4\}$$

The basis functions M(·) were chosen so that the mean of u | m is

$$M(t)m = (m_1, \ m_2 S(t) + m_3(1 - S(t)), \ m_4 S(t) + m_5(1 - S(t)), \ m_6)^T$$

where S(t) is the operating hours indicator, allowing for discontinuities in payment probabilities. As all days of the week are different but some are more different than others, Gaussian process Z(·)|θ is a weighted combination of two Gaussian processes $(z(\cdot) \mid \theta) \perp (z_7(\cdot) \mid \theta)$ with periods one day and one week. A square-root weighting scheme can be used such that $z(\cdot), z_1(\cdot), z_7(\cdot)$ given θ can share the same variances, noting that if $\omega \in [0,1], v \in R_+$, then $\sqrt{\omega}N(0,v) + \sqrt{1-\omega}N(0,v) \sim N(0,v)$. Daily and weekly periodic distances $d_1(\cdot, \cdot), d_7(\cdot, \cdot)$ can be constructed using the period-P distance

$$d_P(s,t) := (P/\pi)\sqrt{(1 - \cos(2\pi(s-t)/P))/2} \text{ for times } s,t$$

In terms of components $\theta_{MF}, \theta_{SS}$ of $\theta$, letting to denote 00:00 on Sunday, the following weighting can be utilized:

$$w(t \mid \boldsymbol{\theta}) = \frac{e^{\theta_{MF}}}{1 + e^{\theta_{MF}}}(1 - S_{SS}(t)) + \frac{e^{\theta_{SS}}}{1 + e^{\theta_{SS}}}S_{SS}(t) \quad \text{where} \quad S_{SS}(t) := e^{-d_7(t,t_0)^6}$$

Thus, increasing $\theta_{MF}$ or $\theta_{SS}$ makes Monday-to-Friday or Saturday-to-Sunday more similar to $z_1(\cdot)$. In terms of components $\theta_1,...,\theta_4, \theta_v, \theta_p$ of $\theta$, the covariance kernels for $P \in \{1,7\}$ can be chosen as follows:

$$w(t \mid \boldsymbol{\theta}) = \frac{e^{\theta_{MF}}}{1 + e^{\theta_{MF}}}(1 - S_{SS}(t)) + \frac{e^{\theta_{SS}}}{1 + e^{\theta_{SS}}}S_{SS}(t) \quad \text{where} \quad S_{SS}(t) := e^{-d_7(t,t_0)^6}$$

where the Matérn function $M_v(\cdot|\cdot)$ involves the modified Bessel function of the second kind $K_v(\cdot)$. Finally, it can be assumed that a Gaussian prior for parameters m, $\theta$ with mean $\mu$ and covariance $\Sigma$.

For parameter estimation, $\theta|D$, $\mu, \Sigma$ can be estimated for a given dataset D and hyper parameters $(\mu, \Sigma) \mid D$ given multiple training datasets $D := \{D_1 , ... , D_{card(D)}\}$. The following provides a scenario in which estimating $\theta|D$, $\mu, \Sigma$ are estimated. Assume we can see a dataset D related to times $t_1, t_2, ... , t_N$ and let $x := z(t_1); z(t_2); ... ; z(t_N); m)$. The model above provides a closed form for $P(x, \theta, D)$, but inference involves one of the troublesome distributions $P(\theta|D)$ or $P(\theta, D)$ for which there are a variety of Monte Carlo, variational, and Laplace approximations. In some embodiments, we can choose to work with a Laplace approximation. For the given $\theta, D$ suppose that $x^*(\theta)$ maximizes $P(x, \theta, D)$ with respect to x and $H(x, \theta)$ is the Hessian of $f(x, \theta):=-\log P(x, \theta, D)$ with respect to x. Then, Laplace's approximation is as follows:

$$\mathbb{P}(\boldsymbol{\theta}, D) = \int_{\mathbb{R}^n} e^{-f(\mathbf{x}, \boldsymbol{\theta})} d\mathbf{x} \approx \int_{\mathbb{R}^n} e^{-f(\mathbf{x}^*(\boldsymbol{\theta}), \boldsymbol{\theta}) - (\mathbf{x} - \mathbf{x}^*(\boldsymbol{\theta}))^T \frac{\mathbf{H}(\mathbf{x}^*(\boldsymbol{\theta}), \boldsymbol{\theta})}{2}(\mathbf{x} - \mathbf{x}^*(\boldsymbol{\theta}))} d\mathbf{x}$$

$$= e^{-f(\mathbf{x}^*(\boldsymbol{\theta}), \boldsymbol{\theta}) - \log \sqrt{\frac{\det(\mathbf{H}(\mathbf{x}^*(\boldsymbol{\theta}), \boldsymbol{\theta}))}{(2\pi)^{\dim(\mathbf{x}^*(\boldsymbol{\theta}))}}}}.$$

This suggests using a point estimate for $\theta$ which solves the bi-level program

$$\min_{\theta} f(x, \theta) + \log \sqrt{\det(H(x, \theta))} \text{ subject to } \min_{x} f(x, \theta)$$

Quasi-Newton methods can be utilized to minimize

$$g(\boldsymbol{\theta}) := f(\mathbf{x}^*(\boldsymbol{\theta}), \boldsymbol{\theta}) + \log \sqrt{\det(\mathbf{H}(\mathbf{x}^*(\boldsymbol{\theta}), \boldsymbol{\theta}))}$$

using finites difference derivatives of approximations to go to $g(\theta)$, which are themselves based on approximate minimization of $f(x, \theta)$ with respect to x. Unless one uses extended precision, it is has been the present inventor's experience that such finite difference derivatives can be unreliable and costly, because they are based on approximate minimization. Further, as $\theta$ usually has a small dimension, it is much faster to use algorithms that exploit the Hessian of $g(\theta)$ with respect to $\theta$. So, instead, the embodiments herein propose minimizing $g(\theta)$ using a trust-region method coupled with the following quadratic expansion $Q(\theta)$ of $x^*(\theta)$ about a given point $\theta_0$ in which $x_0$, d, D are to be determined:

$$\mathbf{Q}(\boldsymbol{\theta}) := \mathbf{x}_0 + \mathbf{d}^T(\boldsymbol{\theta} - \boldsymbol{\theta}_0) + \frac{1}{2}(\boldsymbol{\theta} - \boldsymbol{\theta}_0)^T \mathbf{D}(\boldsymbol{\theta} - \boldsymbol{\theta}_0).$$

Specifically, we approximate $x_0$, d, D and hence the value and gradient of $g(\theta)$ at $\theta_0$ as follows:

1. Approximately minimize $f(x, \theta_0)$ with respect to x and give $x_0$ using trust region.
2. For the resulting $x_0$, solve the following linear equations for d, D:

$$\left[\nabla_{\boldsymbol{\theta}}[\nabla_{\mathbf{x}}f(\mathbf{x},\theta)]_{\mathbf{x}=\mathbf{Q}(\boldsymbol{\theta})}\right]_{\boldsymbol{\theta}=\boldsymbol{\theta}_0} = 0, \qquad \left[\nabla_{\boldsymbol{\theta}}^T\nabla_{\boldsymbol{\theta}}[\nabla_{\mathbf{x}}f(\mathbf{x},\theta)]_{\mathbf{x}=\mathbf{Q}(\boldsymbol{\theta})}\right]_{\boldsymbol{\theta}=\boldsymbol{\theta}_0} = 0.$$

3. Approximate the gradient and Hessian of $g(\theta)$ at $\theta_0$ as the gradient and Hessian of:

$$\tilde{g}(\boldsymbol{\theta}) := f(\mathbf{Q}(\boldsymbol{\theta}),\boldsymbol{\theta}) + \log\sqrt{\det(\mathbf{H}(\mathbf{Q}(\boldsymbol{\theta}),\boldsymbol{\theta}))}.$$

Derivatives can be automatically generated for this method. The Hessian of $\log\sqrt{\det(A(\theta))}$ can be found where $A(\theta):=H(Q(\theta),\theta)$. This can be accomplished using the well-known fact that if $R(\theta)$ is the Cholesky decomposition of $A(\theta)$, then $\log\sqrt{\det(A(\theta))} = \sum_{k=1}^{\dim(\theta)}\log R(\theta)_{kk}$. Thus, extending algorithms for differentiating the Cholesky decomposition to use an appropriate symbolic decomposition for $A(\theta)$, the following can be computed:

$$\frac{\partial^2\log\sqrt{\det(\mathbf{A}(\boldsymbol{\theta}))}}{\partial\theta_i\partial\theta_j} = \sum_{k=1}^{\dim(\boldsymbol{\theta})}\left(\frac{\frac{\partial^2\mathbf{R}(\boldsymbol{\theta})_{kk}}{\partial\theta_i\partial\theta_j}}{\mathbf{R}(\boldsymbol{\theta})_{kk}} - \frac{\frac{\partial\mathbf{R}(\boldsymbol{\theta})_{kk}}{\partial\theta_i}\frac{\partial\mathbf{R}(\boldsymbol{\theta})_{kk}}{\partial\theta_j}}{(\mathbf{R}(\boldsymbol{\theta})_{kk})^2}\right)$$

Regarding estimating $(\mu,\Sigma)|D$, this process can be based on multiple pre-existing databases associated with a few cities. In some embodiments, a slow and partly-manual form of type-II maximum likelihood for the Laplace approximation above can be implemented. Specifically, it can be assumed that $\Sigma$ is diagonal and used as a combination of a coordinate descent over the parameters of $\mu$ and the diagonals of $\Sigma$, coupled with rounding based on human interpretation of the datasets to minimize the risk of overfitting for other cities.

Regarding prediction, two types of prediction may be implemented. First, achieving the distribution of Z(t) at a given time t is desirable such as when predicting the probability at least one vacant stall remains to guide drivers. Second, the average occupancy fraction or fraction-minus-low over a set of times T should be obtained, which for an appropriate $F(\cdot)$ are of the form $\langle F(Z(t))dt\rangle_{t\in T}|D$. These two tasks can be addressed by sampling $z(\cdot),m|D,\theta$ at prediction times. The methods for the first two tasks can be described followed by a sampling method.

Regarding the distribution of Z(t)|D, samples $(z_p^{(k)},m^{(k)} : k = 1,...N)$ of $z_p:=z(t),m$ can be generated and the Monte Carlo averaged used as follows:

$$\mathbb{P}(\mathbf{Z}(t)\mid D) \approx \frac{1}{N}\sum_{k=1}^{N}\mathbb{P}(\mathbf{Z}(t)\mid \mathbf{z_p}^{(k)},\mathbf{m}^{(k)}) =: \mathbb{P}_{MC}(\mathbf{Z}(t)\mid D)$$

The occupancy $Z_1(t)+Z_2(t)=z$ given the payment $Z_1(t)+Z_3(t)=p$ is:

$$\mathbb{P}(z\mid D,p) \approx \frac{\sum_{\mathbf{Z}:Z_1(t)+Z_2(t)=z,Z_1(t)+Z_3(t)=p}\mathbb{P}_{MC}(\mathbf{Z}(t)\mid D)}{\sum_{\mathbf{Z}:Z_1(t)+Z_3(t)=p}\mathbb{P}_{MC}(\mathbf{Z}(t)\mid D)}$$

Regarding the distribution of $\langle F(Z(t))dt\rangle_{t\in T}|D$, we would like to measure our uncertainty about this distribution, but we do not model the short-term dependencies in Z(t). The best we can do is to measure the uncertainty due to our limited knowledge of $\alpha(\cdot)$, which is captured by the distribution of $F|D:=\langle E[F(Z(t))\mid\alpha(t)]\rangle_{t\in T}|D$ which we approximate with samples $(z_p^{(k)},m^{(k)} : k = 1,...,N)$ of $z_p := (z(t_1),...,z(t_{N_T})),m$ where $t_1,..,t_{N_T}$ are uniformly-spaced times in T and using the Monte Carlo distribution:

$$\mathbb{P}(\mathcal{F} \mid D) \approx \frac{1}{N} \sum_{k=1}^{N} \delta \left( \mathcal{F} - \frac{1}{N_T} \sum_{i=1}^{N_T} \mathbb{E}[F(\mathbf{Z}(t_i)) \mid \boldsymbol{\alpha}(t_i) = \boldsymbol{\sigma}(\mathbf{z}^{(k)}(t_i) + \mathbf{M}(t_i)\mathbf{m}^{(k)}] \right)$$

Regarding sampling z(·),m|D,θ, given a dataset D relating to a set of observation times $t_1,...,t_{N_T}$ and a set of prediction times $s_1,...,s_{N_s}$, let $z_o := (z(t_1);...;z(t_{N_t}))$ be values of the combined process at the observation times and $z_p := (z(s_1);...;z(s_{N_s}))$ be values of he combined process at prediction times. Given a point estimate of θ, we would now like to sample $z_p$,m | D,θ. First, note that the combined process satisfies z(·)|θ~GP(0(·),k(·,·)) where:

$$k(s,t \mid \theta) := \sqrt{w(s \mid \theta)w(t \mid \theta)}K_1(s,t \mid \theta) + \sqrt{(1 - w(s \mid \theta))(1 - w(t \mid \theta))}K_7(s,t \mid \theta)$$

Thus, letting $(a_1,...,a_{N_a}):=(t_1,...,t_{N_t},s_1,...,s_{N_s})$, we have the following:

$$\mathrm{Cov}\left( \begin{pmatrix} \mathbf{z}_o \\ \mathbf{z}_p \end{pmatrix}, \begin{pmatrix} \mathbf{z}_o \\ \mathbf{z}_p \end{pmatrix} \mid \boldsymbol{\theta} \right) = \begin{pmatrix} \mathrm{k}(a_1,a_1 \mid \boldsymbol{\theta}) & \cdots & \mathrm{k}(a_1,a_{N_a} \mid \boldsymbol{\theta}) \\ \vdots & \ddots & \vdots \\ \mathrm{k}(a_{N_a},a_1 \mid \boldsymbol{\theta}) & \cdots & \mathrm{k}(a_{N_a},a_{N_a} \mid \boldsymbol{\theta}) \end{pmatrix} =: \begin{pmatrix} \mathbf{K}_{oo} & \mathbf{K}_{op} \\ \mathbf{K}_{po} & \mathbf{K}_{pp} \end{pmatrix} \qquad (1)$$

Additionally, an operation can be performed to let $x^*:=(z_0^*,m^*)$ minimize f(x,θ) with respect to x and H* be the Hessian of f(x,θ) with respect to the x at that point. The Laplace approximation suggests that we proceed by assuming that:

$$x \mid D, \theta \overset{assumed}{\sim} N(x^*, H^{*-1}) \qquad (2).$$

Also, let ⨀ Using Schur-complements, for our model it follows from equations (1) and (2) above that:

$$\begin{pmatrix} \mathbf{z}_p \\ \mathbf{m} \end{pmatrix} \mid D, \theta \sim \mathcal{N}\left( \begin{pmatrix} \mathbf{U}\mathbf{z}_o^* \\ \mathbf{m}^* \end{pmatrix}, \begin{pmatrix} \mathbf{K}_{pp} - \mathbf{U}\mathbf{K}_{op} & 0 \\ 0 & 0 \end{pmatrix} + \begin{pmatrix} \mathbf{U}^T & 0 \\ 0 & \mathbf{I} \end{pmatrix}^T \mathbf{H}^{*-1} \begin{pmatrix} \mathbf{U}^T & 0 \\ 0 & \mathbf{I} \end{pmatrix} \right).$$

Such samples can be readily generated by standard methods for the normal distribution.

To simulate training data from a mobile sensor, Z(t) was sampled at 60 random times during the a particular period in operating hours, excluding holidays, for 292 blocks in Los Angeles. The disclosed approach was used to make predictions for this period. A DLM (Discretized Linear Model) was also trained in which a per-block-face linear regression was used to determine $\beta_0,..., \beta_2$ and $v_0$ wherein

$$occupancy(t) \mid \beta_0,..., \beta_2, v_0 \sim (\beta_0 + \beta_1 \cdot payment(t) + \beta_2 \cdot averagepayment(t), v_0)$$

where the average payment is over all weeks in January-March at the time-of-the-week t. To evaluate posterior distributions, when this model predicts an occupancy $Z_o \sim N(m_o, v_o)$, , we extract a discrete distribution:

$$\hat{\mathbb{P}}(Z_O = z) := (2\pi v_O)^{-1/2} \int_{x:|x-z| \leq \min_{y \in \{0,...,n\}} |x-y|} \exp(-(x - m_O)^2/(2v_O))dx$$

It should be appreciated that this DLM looks like a straw man, but is far better than a global regression over all block faces.

Table 1 below lists the Negative Log Posterior Predictive Probability per Point for our method trained on different types of observations and tested with or without access to the payment at the prediction time, as well as a result for the discretized linear model, in which OVPU means the full state, OPP means the occupancy and the payment plus extra samples of payment every 3 hours, OP means occupancy and payment, O means occupancy-only, and O|P means occupancy given the payment at the prediction time.

Table 1

| Distribution to Predict | Training Data | | | |
| --- | --- | --- | --- | --- |
| | OVPU | OPP | OP | O |
| OVPU | 3.665 | 3.758 | 3.767 | - |
| O\|P | 1.526 | 1.528 | 1.524 | - |
| O | 1.657 | 1.635 | 1.651 1 | 1.647 |

Clearly, predicting OVPU is much more difficult than predicting O which is harder than predicting O|P. For DLM which also uses the average payment, the corresponding NLPPPP for O|P was 1.823, which is much worse than the proposed method. Otherwise, the results are not as one might at first imagine, for instance, using extra payment data (OPP) hinders the prediction of O|P as that data is dependent and can make the model over-confident, yet OPP seems to help when predicting O only.

The fraction-high-minus-fraction-low price recommendation was estimated for the three Mon-Fri. time-of-day segments and compared with the recommendation based on full data for Apr-Jun. (labeled "Ideal"), under the assumption that the impact of actual price changes on Jan-Jun behavior was small, given that few actual price changes were made at that time as most block faces had already reached the maximum change that was allowed. Results are presented for an "average" which takes the average fraction-high-minus-fraction-low for the samples that fall in each segment. The following table counts block faces and time-of-day segments with a given pair of recommendations, coded as price-down, price-same, and price-up with an arrow indicated respective directions as shown in Table 2 below.

Table 2

| Ideal | DLM | | | Average | | | Proposed | | | Full Data | | |
| --- | --- | --- | --- | --- | --- | --- | --- | --- | --- | --- | --- | --- |
| | ↘ | → | ↗ | ↘ | → | ↗ | ↘ | → | ↗ | ↘ | → | ↗ |
| ↘ | 289 | 26 | 0 | 291 | 24 | 0 | 295 | 20 | 0 | 308 | 7 | 0 |
| → | 104 | 153 | 10 | 89 | 143 | 35 | 68 | 182 | 17 | 83 | 166 | 18 |
| ↗ | 19 | 174 | 75 | 7 | 73 | 188 | 4 | 95 | 169 | 6 | 55 | 207 |

DLM makes 13 more severe errors (down-up or up-down) than when using full data, but the rates of severe errors for the other methods are similar to using full data. In general, the disclosed approach tends to be safe and recommends no-price-change more often.

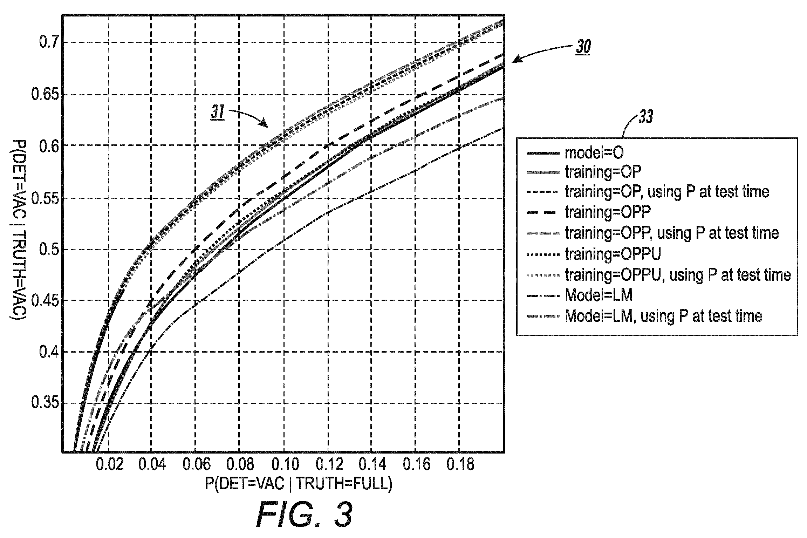

For guidance, models were trained on Jan-Mar data to predict whether a block face has at least one vacant space (VAC) rather than being fully occupied (FULL) at test times in Apr-Jun. with-or-without the assistance of payment data at test time. The corresponding ROC curve 31 is shown in graph 30 of FIG. 3, in accordance with an example embodiments. Graph 30 is associated with the legend 33 depicted in FIG. 3 and together this data indicates ROC data for detecting block faces with vacancies. Based on the sample data shown in FIG. 3, a conclusion can be reached that some drivers would find a false-positive rate (FPR) over 1% annoying and at FPR=1%, the true-positive rate (TPR) for the disclosed method and system without payment at test time is 39%, whereas the TPR with payment data is 48%. Thus payment data provides a 20% increase in the number of block-faces-with-vacancies detected, even for Los Angeles.

Regarding runtime, in certain cases, the disclosed embodiments can take under 1 minute for 100 observations from a block face with n = 20 on a laptop with a 2.67 GHz i5. The runtime increases cubically with the number of samples.

Rather than modeling a single block face, in some alternative embodiments, it is possible to define Z(t) for only part of a block face, which is of practical importance for very long block faces and when some stalls possibly vary statistics from others, for instance if some stalls are residential permit parking, others are handicapped-only parking, others have a 15-minute time limit, others are FBI-only, and yet others are ordinary paid parking. It is also possible to define Z(t) as the union of multiple block faces, although a single marginalized-multinomial-Dirichlet model becomes more computationally expensive as capacity increases and can give less accurate inferences particularly if the block faces merged have very different relationships between occupancy and payment.

For observations Y(t), one might use error models for occupancy like the asymmetric bit-flip model, error models for payment to account for the fact that for some locations allow payment at different block faces or distributional models which allow for score outputs of mobile occupancy detectors. Each of these models might include its own parameters in $\theta$. For the full state Z(t), alternatives include truncated versions of the multinomial-generalized-Dirichlet, multivariate negative-binomial, or learned mixture distributions. Sometimes the notion of capacity is somewhat ambiguous, for instance when stalls are not demarcated, drivers do not respect the demarcations or in certain pay-and-display settings where the payment can exceed the number of stalls. If this situation is rare, one might simply truncate observations, which exceed some nominal capacity, but if it is common, one may model Z(t) as a mixture of discrete distributions having different capacities. For the mean function $\sigma(\cdot)$, alternatives may include alternative nesting arrangements, such as, for example, payment drive occupancy as well as probit, generalized-extreme value or adaptive inverse-link functions themselves based on Gaussian processes.

There is also considerable flexibility in the choice of basis functions M($\cdot$), for instance one might allow for typical daily and weekly behavior with Fourier or wavelet basis functions, or use basis functions which allow for rapid-but-smooth change near the ends of operating hours rather than discontinuities, for instance, using a smoothed version of the operating hours indicator. One might attempt to learn a dictionary of basis functions, for instance, with PCA. This was one of the first things we tried, but found we needed quite a few to reliably capture all the variations in the example Los Angeles dataset, which is not necessarily representative of the behavior in other cities, leading us to prefer a Gaussian process approach. Further, the basis functions may include other predictive features, for instance to predict typical time-series behavior near churches, bars, or restaurants, as well as basis functions which reflect seasonal variations or the behavior of nearby block faces.

The combined process z($\cdot$) might have weightings w($\cdot \mid \theta$), which separate days in ways other than Monday-to-Friday versus Saturday-to-Sunday. The covariances KP ($\cdot, \cdot \mid \theta$), for example, can be configured from a large number of periodic kernels other than the Matérn. In some embodiments, diagonal covariances may be used, but one could allow for dependence between, for example, the gradient of the occupancy and the dispersion to capture situations where the arrival or departure of whole groups of drivers are dependent, say because of traffic conditions or over-running meetings. Further, the covariances might be selected to represent a quasi-periodic rather than a periodic behavior. For instance, in some embodiments, rather than using a period-P distance, which corresponds to Euclidean distance on a circle, a Euclidean distance on a helix may be used, where the third dimension corresponds to long-term changes in $z_P$ ($\cdot$), or to the same effect, one might use a kernel product such as $K_P$ (s, t) $K_L$ (s, t) in which $K_L$ (s, t) slowly decays with |s - t|. Of course a large range of non-normal priors rather than N($\mu$, $\theta$) may be utilized and implanted in the context of alternative embodiments.

Rather than simple Monte Carlo averages, if one is interested in the tails of the distribution, importance sampling can be used. Rather than using a single point estimate, for example, the Laplace approximation can be extended to averaging multiple point estimates of $\theta$. For instance, the present inventor(s) have experimented with the central composite designs, finding that they only substantially reduce the negative log predictive posterior relative to a single point estimate in rare situations where the sampled dataset D is highly unrepresentative of the full behavior, whereas the use of such multi-point techniques can increase the computational cost by 10x.

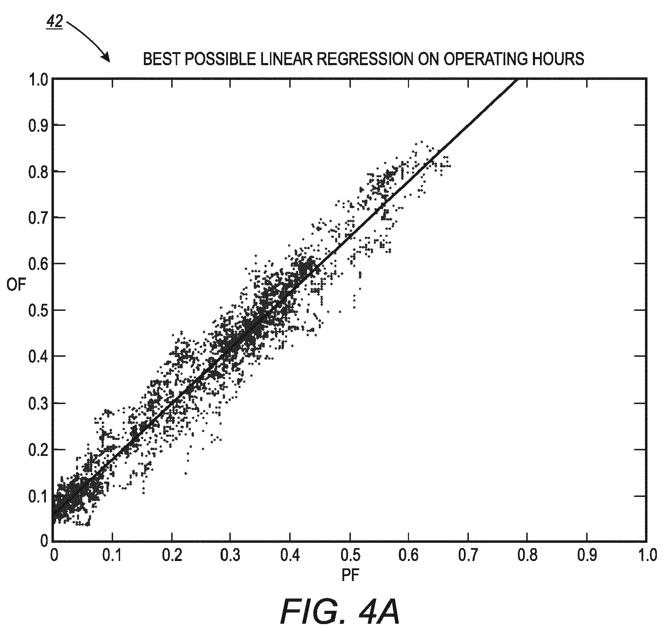

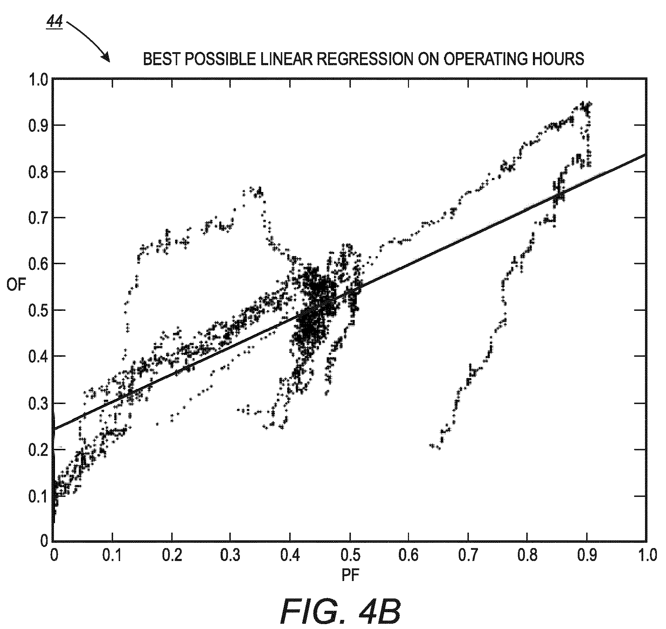

A gentle graphical tour demonstrates samples in which embodiments may be implemented. One example involves the measurement of the average occupancy fraction OF and the average payment fraction PF at each minute-of-the-week over a 6-month period during operating hours for a particular location or address in, for example, Los Angeles. Such data is represented by the black dots in graphs 42 and 44 of FIGS. 4A and 4B, in accordance with an example embodiment. Graphs 42 and 44 plot example data indicative of a best possible linear regression in terms of operating hours. If a constant fraction of people pay, for example, then a linear relationship can be expected between OF and PF. Such a line has a positive intercept, so that OF = 0.05 when PF = 0, as some people do not pay. It is also possible to have a negative intercept, as in some places stalls are vacant-but-paid as people pay for longer than they stay. In this case very good predictions can be obtained using a linear relationship between occupancy and payment.

If we repeat this for another location in Los Angeles, for example, we do not see such a nice linear relationship. On Monday-through-Friday early in the day, a small fraction of people pay. This fraction increases through the day and towards the end of the day there are regularly stalls that are vacant-but-paid. Furthermore, on Saturday, there are both more people and a greater number of people pay. In this case, if we were to predict the occupancy fraction curve averaged over a 6-month period, the RMSE of a linear model would be 0.11 whereas other models achieve an RMSE of 0.07 on this particular example, given sparse-in-time data. We can make such large improvements for about 20% of block faces.

It has been argued that a linear model might be good when the correlation between OF and PF is high. In fact this is not necessarily the case. For instance, one can have low correlation, but good predictability because the OF does not vary greatly with the time-of-the-week. Situations may even be encountered where the correlation is negative, so the best linear predictor of the OF is a decreasing function of the PF.

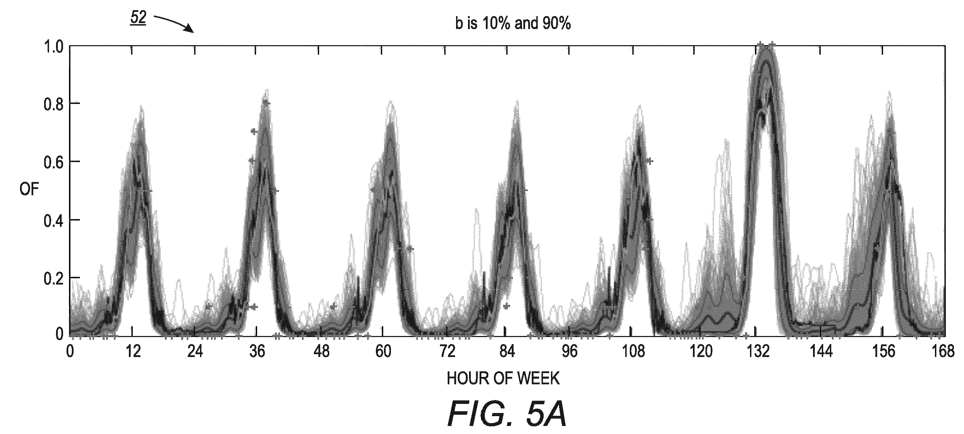

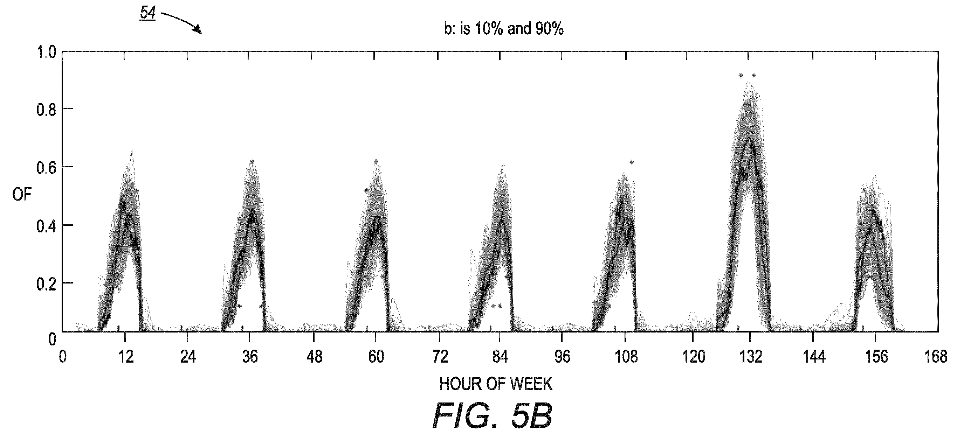

Returning now to the topic of the location associated with the data depicted in FIG. 3, one may observe 150 samples of the occupancy and payment at different times of the week over a 6-month period. Such samples can be plotted as illustrated in graphs 52 and 54 of FIGS. 5A and 5B. Here, the average occupancy fraction estimated using a linear model during operating hours can be compared with the average occupancy fraction measured with the full data. For tasks such as selecting operating hours, it may be useful to employ a model, which also makes predictions outside operating hours, which would be difficult to accomplish utilizing a linear model because there are usually few payments at such times.

It is also useful to associate the predictions with a measure of uncertainty, either by showing the 10- and 90-percentiles of the predictions or with 300 Monte Carlo samples from the predictive probability distribution. If the percentiles are "right," then (roughly speaking) the black line should be below the lower thin blue line about 10 percent of the time and above the upper thin blue line about 10 percent of the time. Note that Monte Carlo samples are particularly variable around hour 125, which is 5 AM on a Saturday morning. This is because the model knows that weekends can behave differently from Monday-through-Friday and it has seen relatively few samples around that time.

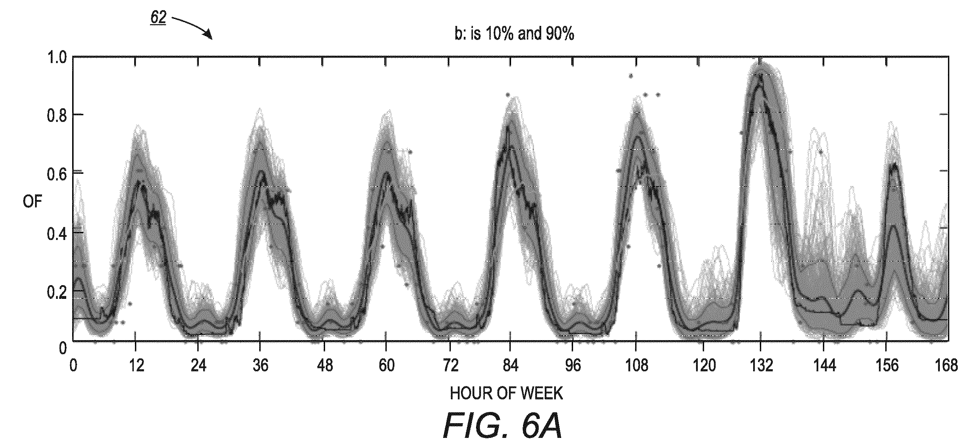

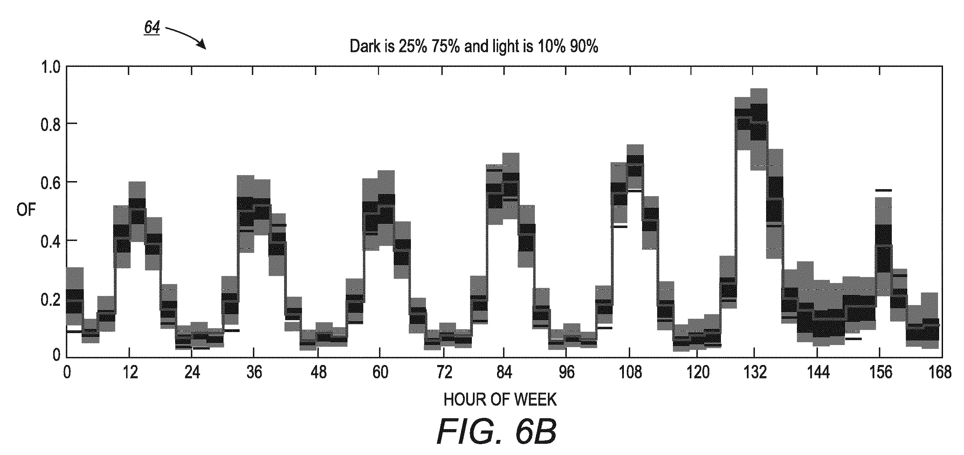

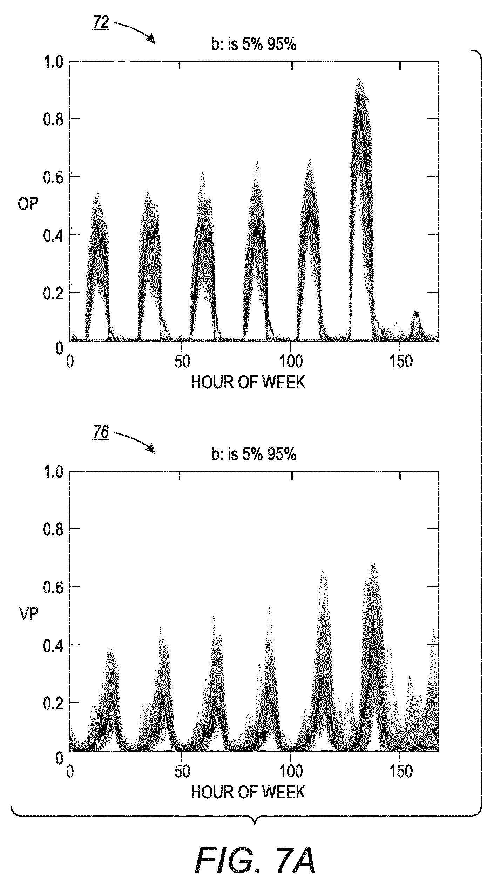

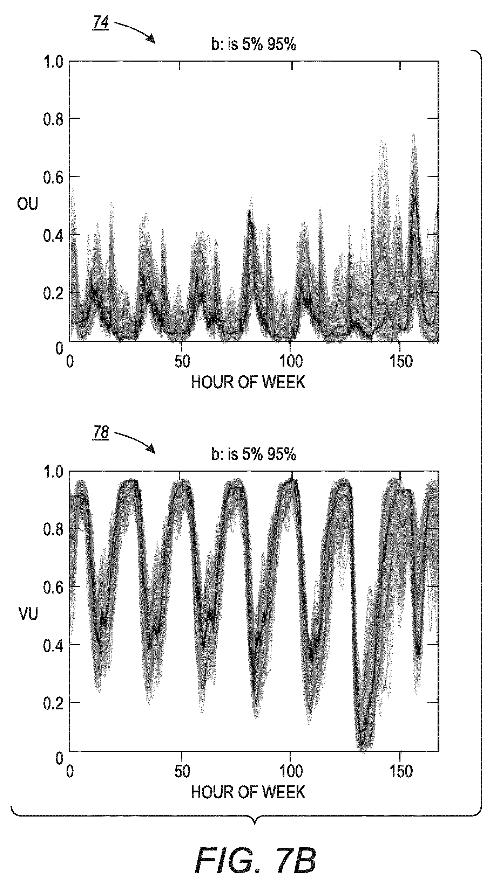

FIGS. 6A-6B illustrate graphs 62, 64 in accordance with an example embodiment. Repeating for the other Los Angeles location associated with the FIG. 4 data, it can be seen from the data depicted in FIGS. 6A-6B that the linear prediction largely overestimates the occupancy on Monday afternoon (e.g., hour 17) and Saturday afternoon (e.g., hour 137), whereas a preferred model makes appropriate estimates. FIGS. 6A-6b also illustrate that the samples can also be aggregated into averages over any time window, and that this model can also estimate the fraction of stalls that are occupied-and-paid (OP), occupied-and-unpaid (OU), vacant-and-paid (VP), or vacant-and-unpaid (VU) as respectively shown in graphs 72, 74, 76, and 78 in FIG. 7 in accordance with an example embodiment, even though it is only trained using samples of the number paid and number occupied. This example situation may be useful for enforcement purposes.

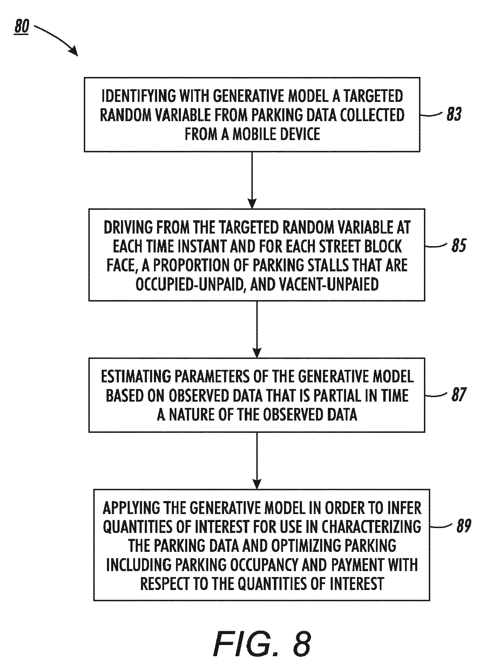

FIG. 8 illustrates a high-level flow chart of operations depicting logical operational steps of a method 80 for characterizing mobile parking sensor data, in accordance with an example embodiment. As indicated at block 83, a step or logical operation can be implemented for identifying with a generative model, a targeted random variable from parking data collected from a mobile sensor (e.g., mobile device 201/mobile sensor 102). Such parking data can include, for example, data indicative of time instants and street block faces. As depicted next at block 85, a step or logical operation can be implemented for deriving from the targeted random variable at each time instant and for each street block face, a proportion of parking stalls associated with payment data (e.g., occupied-paid, occupied-unpaid, and vacant-unpaid). As described thereafter at block 87, a step or logical operation can be implemented for estimating parameters of the generative model based on observed data that is at least partial in time and based on the nature of the observed data as discussed previously. Then, as indicated at block 89, a step or logical operation can be implemented for applying the generative model in order to infer quantities of interest for use in characterizing the parking data including a price and a rate with respect to the quantities of interest.

The quantities of interest can be employed to characterize the parking data for use in setting optimal dynamic prices. Such quantities of interest can also be utilized to characterize the parking data for use in providing optimal advice to a driver wishing to park. The generative model can include, for example, data indicative of the counts of stalls that are occupied-vacant multiplied by paid-unpaid and wherein the counts include small, bounder integers. The generative model can include an assumption that latent processes drive a full state and dispersion thereof as combinations of a Gaussian process and basis functions.

Note that in some embodiments, computer program code for carrying out operations of the disclosed embodiments may be written in an object oriented programming language (e.g., Java, C#, C++, etc.). Such computer program code, however, for carrying out operations of particular embodiments can also be written in conventional procedural programming languages, such as the "C" programming language or in a visually oriented programming environment, such as, for example, Visual Basic.

The program code may execute entirely on the user's computer, partly on the user's computer, as a stand-alone software package, partly on the user's computer and partly on a remote computer, or entirely on the remote computer. In the latter scenario, the remote computer may be connected to a user's computer through a local area network (LAN) or a wide area network (WAN), wireless data network e.g., Wi-Fi, Wimax, 802.xx, and cellular network or the connection may be made to an external computer via most third party supported networks (e.g., through the Internet via an Internet Service Provider).

The embodiments are described at least in part herein with reference to flowchart illustrations and/or block diagrams of methods, systems, and computer program products and data structures according to embodiments of the invention. It will be understood that each block of the illustrations, and combinations of blocks, can be implemented by computer program instructions. These computer program instructions may be provided to a processor of a general-purpose computer, special purpose computer, or other programmable data processing apparatus to produce a machine, such that the instructions, which execute via the processor of the computer or other programmable data processing apparatus, create means for implementing the functions/acts specified in the block or blocks.

These computer program instructions may also be stored in a computer-readable memory that can direct a computer or other programmable data processing apparatus to function in a particular manner, such that the instructions stored in the computer-readable memory produce an article of manufacture including instruction means which implement the function/act specified in the various block or blocks, flowcharts, and other architecture illustrated and described herein.

The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide steps for implementing the functions/acts specified in the block or blocks.

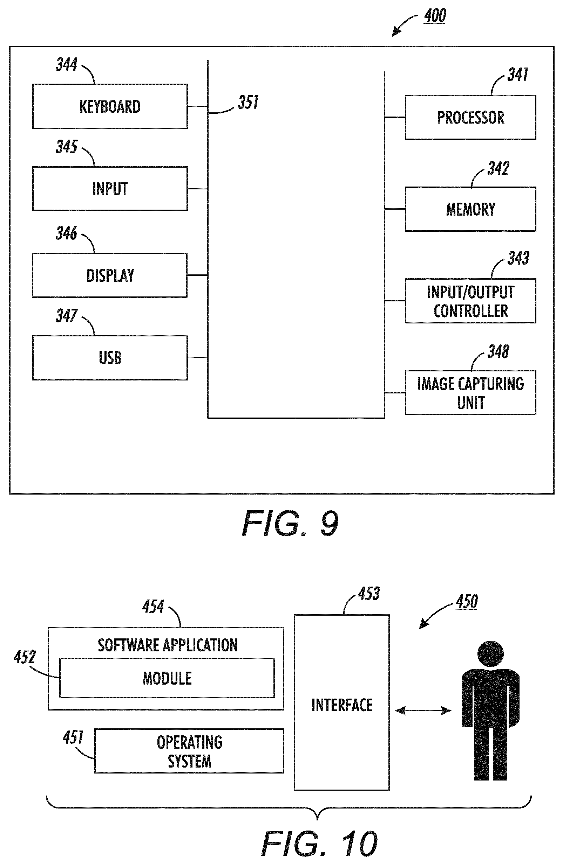

FIGS. 9-10 are shown only as exemplary diagrams of data-processing environments in which embodiments may be implemented. It should be appreciated that FIGS. 9-10 are only exemplary and are not intended to assert or imply any limitation with regard to the environments in which aspects or embodiments of the disclosed embodiments may be implemented. Many modifications to the depicted environments may be made without departing from the spirit and scope of the disclosed embodiments.

As illustrated in FIG. 9, some embodiments may be implemented in the context of a data-processing system 400 that can include one or more processors such as processor 341, a memory 342, a controller 343 (e.g., an input/output controller), a peripheral USB (Universal Serial Bus) connection 347, a keyboard 344 (e.g., a physical keyboard or a touchscreen graphically displayed keyboard), an input component 345 (e.g., a pointing device, such as a mouse, track ball, pen device, which may be utilized in association or with the keyboard 344, etc.), a display 346, and in some cases, an image-capturing unit 348 (e.g., a digital video camera). Data-processing system 400 may be, for example, a client computing device (e.g., a client PC, laptop, tablet computing device, etc.) which communicates with peripheral devices (not shown) via a client-server network (e.g., wireless and/or wired).

As illustrated, the various components of data-processing system 400 can communicate electronically through a system bus 351 or similar architecture. The system bus 351 may be, for example, a subsystem that transfers data between, for example, computer components within data-processing system 400 or to and from other data-processing devices, components, computers, etc. Data-processing system 400 may be implemented as, for example, a server in a client-server based network (e.g., the Internet) or can be implemented in the context of a client and a server (i.e., where aspects are practiced on the client and the server). Data-processing system 400 may be, for example, a standalone desktop computer, a laptop computer, a Smartphone, a pad computing device, a server, and so on.

FIG. 10 illustrates a computer software system 450 for directing the operation of the data-processing system 400 shown in FIG. 9. Software application 454, stored for example in memory 342, generally includes a kernel or operating system 451 and a shell or interface 453. One or more application programs, such as software application 454, may be "loaded" (i.e., transferred from, for example, memory 342 or another memory location) for execution by the data-processing system 400. The data-processing system 400 can receive user commands and data through the interface 453; these inputs may then be acted upon by the data-processing system 400 in accordance with instructions from operating system 451 and/or software application 454. The interface 453, in some embodiments, can serve to display results, whereupon a user 449 may supply additional inputs or terminate a session.

The software application 454 can include one or more modules such as module 452, which can, for example, implement instructions or operations such as those described herein. Examples of instructions that can be implemented by module 452 include operations such as those shown and described herein with respect to blocks 83, 85, 87, and 89 in FIG. 8 and the generative model and methodology discussed elsewhere herein.

The following discussion is intended to provide a brief, general description of suitable computing environments in which the system and method may be implemented. Although not required, the disclosed embodiments will be described in the general context of computer-executable instructions, such as program modules, being executed by a single computer. In most instances, a "module" constitutes a software application. However, a module may also be composed of, for example, electronic and/or computer hardware or such hardware in combination with software. In some cases, a "module" can also constitute a database and/or electronic hardware and software that interacts with the database.

Generally, program modules include, but are not limited to, routines, subroutines, software applications, programs, objects, components, data structures, etc., that perform particular tasks or implement particular abstract data types and instructions. Moreover, those skilled in the art will appreciate that the disclosed method and system may be practiced with other computer system configurations, such as, for example, hand-held devices, multi-processor systems, data networks, microprocessor-based or programmable consumer electronics, networked PCs, minicomputers, mainframe computers, servers, and the like.

Note that the term module as utilized herein may refer to a collection of routines and data structures that perform a particular task or implements a particular abstract data type. Modules may be composed of two parts: an interface, which lists the constants, data types, variable, and routines that can be accessed by other modules or routines; and an implementation, which is typically private (accessible only to that module) and which includes source code that actually implements the routines in the module. The term module may also simply refer to an application, such as a computer program designed to assist in the performance of a specific task, such as word processing, accounting, inventory management, etc. Thus, the instructions or steps such as those shown in blocks 83, 85, 87, and 89 of FIG. 8 and the methodology discussed elsewhere herein can be implemented in the context of such a module or modules, sub-modules, and so on.

FIGS. 9-10 are thus intended as examples and not as architectural limitations of disclosed embodiments. Additionally, such embodiments are not limited to any particular application or computing or data processing environment. Instead, those skilled in the art will appreciate that the disclosed approach may be advantageously applied to a variety of systems and application software. Moreover, the disclosed embodiments can be embodied on a variety of different computing platforms, including, for example, Windows, Macintosh, UNIX, LINUX, and the like.

It will be appreciated that variations of the above-disclosed and other features and functions, or alternatives thereof, may be desirably combined into many other different systems or applications. Also, that various presently unforeseen or unanticipated alternatives, modifications, variations or improvements therein may be subsequently made by those skilled in the art which are also intended to be encompassed by the following claims.

**Claims**

1. A method for characterizing mobile parking sensor data, said method comprising:

   identifying with a generative model, a targeted random variable from parking data collected from at least one mobile sensor, said parking data including data indicative of time instants and geographical locations;
   determining parameters of said generative model based on observed data that is at least partial in time; and
   applying said generative model in order to infer quantities of interest for use in characterizing said parking data including a price and a rate with respect to said quantities of interest.

2. A system for characterizing mobile parking sensor data, said system comprising:

   at least one processor; and
   a computer-usable medium embodying computer program code, said computer-usable medium capable of communicating with said at least one processor, said computer program code comprising instructions executable by said at least one processor and configured for:

      identifying with a generative model, a targeted random variable from parking data collected from at least one mobile sensor that communicates electronically with said at least one processor, said parking data including data indicative of time instants and geographical locations;
      determining parameters of said generative model based on observed data that is at least partial in time; and
      applying said generative model in order to infer quantities of interest for use in characterizing said parking data including a price and a rate with respect to said quantities of interest.

3. The system of claim 2 wherein said instructions are further configured for deriving from said targeted random variable at each time instant among said time instants and for each street block face among said geographical locations, a proportion of parking stalls associated with payment data.

4. The system of claim 2 wherein said quantities of interest are used to characterize said parking data for use in dynamically setting said price and said rate.

5. The system of claim 2 wherein said quantities of interest are used to characterize said parking data for use in providing advice to a driver wishing to park at geographical locations.

6. The system of claim 2 wherein said generative model includes counts of stalls that are occupied-vacant multiplied by paid-unpaid and wherein said counts comprises small, bounder integers.

7. The system of claim 2 wherein said generative model includes an assumption that latent processes drive a full state and a dispersion thereof as combinations of a Gaussian process and basis functions.

8. The system of claim 2 wherein said at least one mobile sensor comprises a sensor located in or integrated with a vehicle.

9. A computer readable medium having stored therein instructions for characterizing mobile parking sensor data, that when executed by a client device, cause said client device to perform functions comprising:

   identifying with a generative model, a targeted random variable from parking data collected from at least one mobile sensor, said parking data including data indicative of time instants and geographical locations, said at least one mobile sensor comprising a sensor located in or integrated with a vehicle;
   determining parameters of said generative model based on observed data that is at least partial in time; and
   applying said generative model in order to infer quantities of interest for use in characterizing said parking data including a price and a rate with respect to said quantities of interest.

10. The computer-readable medium of claim 9, wherein said functions further comprise deriving from said targeted random variable at each time instant among said time instants and for each street block face among said geographical locations, a proportion of parking stalls associated with payment data.

*FIG. 1*

FIG. 2

*FIG. 3*

Legend (33):
- model=O
- training=OP
- training=OP, using P at test time
- training=OPP
- training=OPP, using P at test time
- training=OPPU
- training=OPPU, using P at test time
- Model=LM
- Model=LM, using P at test time

X-axis: P(DET=VAC | TRUTH=FULL)
Y-axis: P(DET=VAC | TRUTH=VAC)

FIG. 4A

BEST POSSIBLE LINEAR REGRESSION ON OPERATING HOURS

44

FIG. 4B

FIG. 5A

FIG. 5B

*FIG. 6A*

*FIG. 6B*

_72_

b: is 5% 95%

_76_

b: is 5% 95%

FIG. 7A

FIG. 7B

80

IDENTIFYING WITH GENERATIVE MODEL A TARGETED
RANDOM VARIABLE FROM PARKING DATA COLLECTED
FROM A MOBILE DEVICE — 83

DRIVING FROM THE TARGETED RANDOM VARIABLE AT
EACH TIME INSTANT AND FOR EACH STREET BLOCK
FACE, A PROPORTION OF PARKING STALLS THAT ARE
OCCUPIED-UNPAID, AND VACENT-UNPAIED — 85

ESTIMATING PARAMETERS OF THE GENERATIVE MODEL
BASED ON OBSERVED DATA THAT IS PARTIAL IN TIME
A NATURE OF THE OBSERVED DATA — 87

APPLYING THE GENERATIVE MODEL IN ORDER TO INFER
QUANTITIES OF INTEREST FOR USE IN CHARACTERIZING
THE PARKING DATA AND OPTIMIZING PARKING
INCLUDING PARKING OCCUPANCY AND PAYMENT WITH
RESPECT TO THE QUANTITIES OF INTEREST — 89

## FIG. 8

400

344
KEYBOARD

351

341
PROCESSOR

345
INPUT

342
MEMORY

346
DISPLAY

343
INPUT/OUTPUT CONTROLLER

347
USB

348
IMAGE CAPTURING UNIT

*FIG. 9*

454
SOFTWARE APPLICATION

452
MODULE

453
INTERFACE

450

451
OPERATING SYSTEM

*FIG. 10*

Europäisches
Patentamt

European
Patent Office

Office européen
des brevets

# EUROPEAN SEARCH REPORT

**Application Number**

EP 16 18 9543

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/057686 A1 (GENC YAKUP [US] ET AL) 7 March 2013 (2013-03-07) * figures 1, 2, 9, 10, 12, 13 * * paragraphs [0010], [0027] - [0036], [0055] - [0058] * * paragraphs [0002] - [0007] * * paragraph [0064] * * paragraphs [0073] - [0083], [0088] - [0089], [0098] - [0100] * | 1-10 | INV. G06Q10/04 G06Q30/02 G06Q30/00 G06K9/00 |
| X | US 2014/292541 A1 (KORMAN RONEN [IL]) 2 October 2014 (2014-10-02) * figures 1-3b * * paragraphs [0018] - [0031] * * paragraphs [0035], [0042], [0083] * * paragraphs [0087] - [0105] * * paragraph [0110] * * paragraphs [0120] - [0126] * | 1-10 | |
| A | EP 2 821 975 A1 (XEROX CORP [US]) 7 January 2015 (2015-01-07) * the whole document * | 1-10 | TECHNICAL FIELDS SEARCHED (IPC) G06Q G06K |

The present search report has been drawn up for all claims

| Place of search | Date of completion of the search | Examiner |
|---|---|---|
| The Hague | 13 December 2016 | Meijs, Koen |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 3 147 833 A1**

## ANNEX TO THE EUROPEAN SEARCH REPORT
## ON EUROPEAN PATENT APPLICATION NO.

EP 16 18 9543

This annex lists the patent family members relating to the patent documents cited in the above-mentioned European search report.
The members are as contained in the European Patent Office EDP file on
The European Patent Office is in no way liable for these particulars which are merely given for the purpose of information.

13-12-2016

| Patent document cited in search report | | Publication date | Patent family member(s) | | Publication date |
|---|---|---|---|---|---|
| US 2013057686 | A1 | 07-03-2013 | NONE | | |
| US 2014292541 | A1 | 02-10-2014 | US | 2014292541 A1 | 02-10-2014 |
| | | | WO | 2013088431 A1 | 20-06-2013 |
| EP 2821975 | A1 | 07-01-2015 | AU | 2014203386 A1 | 22-01-2015 |
| | | | EP | 2821975 A1 | 07-01-2015 |
| | | | US | 2015006264 A1 | 01-01-2015 |

EPO FORM P0459

For more details about this annex : see Official Journal of the European Patent Office, No. 12/82